# EUROPÄISCHE PATENTSCHRIFT

(11) **EP 1 381 139 B1**
(45) Veröffentlichungstag und Bekanntmachung des Hinweises auf die Patenterteilung: **06.04.2005**
(21) Anmeldenummer: 03014239.2
(22) Anmeldetag: 25.06.2003
(51) Int. Cl.: H02J 9/06, H02J 13/00, H04L 12/26

(54) **Diagnosebaustein zum Anschluss an ein Installationsbussystem**
Diagnostic building block for connecting to an installation bus system
Module diagnostique pour connecter à un bus d'installation

(30) Priorität: 11.07.2002 DE 10231253
(43) Veröffentlichungstag der Anmeldung: 14.01.2004
(73) Patentinhaber: ABB PATENT GmbH, 68526 Ladenburg (DE)
(72) Erfinder: Heilig, Peter, Dipl.-Ing. (FH), 69121 Heidelberg (DE); Hey, Karsten, 76669 Bad Schönborn (DE); Beckert, Ralf, 69256 Mauer (DE)
(74) Vertreter: Miller, Toivo

(56) Entgegenhaltungen:
- EP-A- 0 723 384
- ABB: "EIB Power Supply Units" PRODUCT MANUAL , [Online] 22. April 2002 (2002-04-22), Seiten 1-31, XP002259220 Gefunden im Internet: <URL:138.227.174.121/.../SCOT/SCOT209.nsf/ VerityDisplay/21B3C14050D194B1C1256C600047 6BBE/ $File/2CDC501005D0201.pdf > [gefunden am 2003-10-27]
- RIS H R: "EIB-BUS-EUROPAISCHER INSTALLATIONSBUS TEIL 2" ELEKTROTECHNIK, VOGEL VERLAG K.G. WURZBURG, DE, Nr. 7/8, 1993, Seiten 61-67, XP000567405 ISSN: 1431-9578

## Beschreibung

Die Erfindung betrifft eine Anzeigeeinrichtung, welche nachfolgend auch als Diagnosebaustein bezeichnet wird und vorzugsweise in Installationsbussystemen, beispielsweise dem Europäischen Installationsbus (EIB), dem Local Operating Network (LON) oder dem Local Control Network (LCN) im Bereich der Gebäudetechnik Anwendung findet.

Anzeigeeinrichtungen in Installationsbussystemen werden zur schnellen Überprüfung und . Anzeige von Betriebszuständen der Busfunktionen und Störungen des Bussystems eingesetzt, zu denen beispielsweise die Überwachung der Busspannung und des Telegrammverkehrs, auf dem Bus zählen.

Eine Anzeigeeinrichtung zur Anzeige von Telegrammen, die über Leitungen des Europäischen Installationsbusses übertragen werden, ist in **DE 4343812 C2** beschrieben. Dabei wird jedes übertragene Telegramm durch ein kurzes Aufleuchten einer Leuchtdiode angezeigt und so aus der Anzahl der Lichtimpulse pro Zeiteinheit die Telegrammrate und somit die Busbelastung bestimmt.

Eine weitere Anzeigeeinrichtung zur Anzeige von Betriebs- und Störungszuständen eines Installationsbussystems ist aus **DE 43 11 094 A1** bekannt. Die Anzeigeeinrichtung enthält Mehrfarb- Leuchtdioden, welche wahlfrei von einem PC aus menügeführt bestimmten Busteilnehmern zuordenbar sind und Betriebs- und Störungszustände mit unterschiedlichen

Farben zur Anzeige bringen, wodurch eine erweiterte Anzeigemöglichkeit für die Zustände erreicht wird.

Eine Überwachung der Netzspannung und das Übertragen an eine Zentrale ist aus EP 0 723 384 bekannt.

Weiterhin bekannt ist eine Anzeigeeinrichtung zur Überprüfung der Busspannung und des Telegrammverkehrs des Europäischen Installationsbusses aus derABB- Firmendruckschrift Product Range Overview 2001; ABB i-bus® EIB als Diagnosebaustein, Typ: DB/S 1.1 bekannt, welcher lediglich eine fehlerhafte Busspannung anzeigt. Eine zusätzliche Auswertung beispielsweise des Spannungspegels der Busspannung sowie die Weiterleitung oder das Absetzen einer Störmeldung ist nicht vorgesehen.

Als ein weiterer Nachteil der dem Stand der Technik entsprechenden Anzeigeeinrichtungen ist anzuführen, dass die Überwachung der Busfunktionen, wie beispielsweise die Überwachung eines Spannungswertes der Busspannung, die Überwachung der Verteilertemperatur oder des Telegrammverkehrs auf einen vorbestimmten Wert, die für eine sinnvolle Diagnose des Bussystems erforderlich sind, fehlen.

Der Erfindung liegt daher die Aufgabe zugrunde, einen Diagnosebaustein zur schnellen Überprüfung von Busfunktionen eines Installationsbusses, insbesondere von Betriebszuständen und/ oder Störungen anzugeben, wobei die Betriebszustände und/oder Störungen nicht nur angezeigt werden, sondern eine weitere Auswertung und Weiterleitung der Betriebszustände und Störmeldungen mit einem relativ geringem technischen Aufwand möglich ist.

Diese Aufgabe wird durch einen Diagnosebaustein mit den im Anspruch 1 angegebenen Merkmalen gelöst. Vorteilhafte Ausgestaltungen und Weiterbildungen der Erfindung ergeben sich aus den anhängigen Ansprüchen.

Die Erfindung basiert auf einer Weiterentwicklung des in der Firmendruckschrift **Product Range Overview 2001, ABB i-bus® EIB** beschriebenen Diagnosebausteins DB/S 1.1.

Der Diagnosebaustein wird durch die Erfindung in seiner Funktion so erweitert, dass er wahlweise neben der Anzeige der Busspannung, des Telegrammverkehrs sowie einem Unterschreiten der Busspannung mittels Leuchtdioden auch einen vorbestimmten Bereich einer Größe bzw. einen Schwellwert einer Busfunktion, beispielsweise der Busspannung oder der Umgebungstemperatur überwacht und zusätzlich oder alternativ eine Störmeldung beim Unter- und/oder Überschreiten des vorbestimmten Bereiches der Größe bzw. des vorbestimmten Schwellwertes auf den Bus sendet und/oder über eine im Diagnosebaustein integrierte Leuchtdiode einer Anzeigeeinheit signalisiert.

Die Einstellung der vorbestimmten Bereiche der Busfunktionen wird durch die Angabe eines oberen und/oder unteren Grenzwertes mittels einer speziellen Software, welche als Parametrier- Software bezeichnet wird, realisiert. Dazu werden die einzustellenden Parameter über den Bus in den Diagnosebaustein geladen.

Für die Weiterleitung einer anstehenden Störmeldung ist im Diagnosebaustein für die entsprechende Störmeldung jeweils ein potentialfreier Schaltkontakt integriert, welcher bei anstehender Störmeldung ausgelöst wird. Eine Weiterleitung der anstehenden Störmeldung kann zusätzlich über den Bus erfolgen.

Die auf den Bus gesendeten Meldungen werden durch weitere Busteilnehmer wie beispielsweise mittels eines Applikationsbausteines oder einer bereitgestellten Visualisierungs- Software ausgewertet und weiterverarbeitet.

Der erfindungsgemäße Diagnosebaustein ermöglicht es so auf vorteilhafte Weise Betriebszustände und Störungen des Bussystems nicht nur anzuzeigen sondern auch Störmeldungen des Bussystems, wie beispielsweise das Unter- und/oder Überschreiten eines Spannungspegels, der Verteilertemperatur oder des Telegrammaufkommens, auf den Bus zu senden, weiterzuleiten und auszuwerten.

Eine weitere Beschreibung der Erfindung erfolgt anhand eines in den Zeichnungsfiguren dargestellten Ausführungsbeispieles.

Es zeigen:
- **Fig. 1**: Aufbau des erfindungsgemäßen Diagnosebausteins und

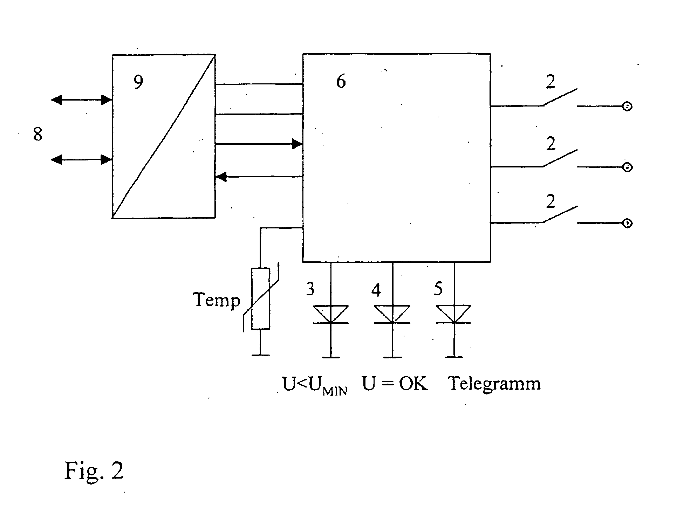

- **Fig. 2**: eine prinzipielle Darstellung der Funktionseinheiten des Diagnosebausteins.

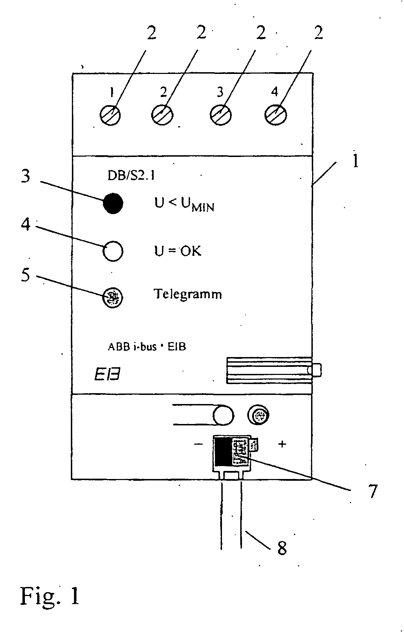

**Fig. 1** zeigt den erfindungsgemäßen Diagnosebaustein 1, welcher mittels einer Bus- Anschlussklemme 7 mit dem Bus 8 eines Installationsbussystems, verbunden ist und Anzeigeeinheiten 3, 4 und 5 zur Anzeige von Betriebszuständen und/oder Störungsmeldungen von Funktionen des Bussystems, insbesondere der Busspannung oder der Tetegrammrate aufweist.

Zu den jeweiligen Anzeigeeinheiten 3, 4 und 5 sind zusätzlich potentialfreie Schaltkontakte 2 vorhanden, die den Zustand der jeweiligen Meldung signalisieren. Der Schaltzustand des jeweiligen Schaltkontaktes wird als Schaltbefehl über die Bus- Anschlussklemme 7 auf den Bus 8 übertragen und steht so als Störmeldung zur weiteren Verarbeitung dem Bussystem zur Verfügung.

Im dargestellten Ausführungsbeispiel werden die Überwachung der Busspannung, der Umgebungstemperatur, insbesondere der Verteilertemperatur, und eine Signalisierung und Auswertung der gesendeten Bustelegramme realisiert.

Zur Überwachung der Busspannung wird ein vorbestimmter Spannungswert der zu überwachenden Busspannung zur Visualisierung auf den Bus 8 gesendet. Nach Unterschreitung des vorbestimmten Spannungswertes, welcher mittels einer Parametrier- Software zuvor eingestellt wurde, wird ein Schaltkontakt 2, welcher der Funktion zur Überwachung der Busspannung zugeordnet ist, ausgelöst und sein Schaltzustand auf den Bus 8 gesendet.

Alternativ oder zusätzlich wird über die im Diagnosebaustein 1 integrierte Anzeigeeinheit 3, welche der Funktion der Überwachung des vorbestimmten Spannungswertes zugeordnet ist und vorzugsweise als Leuchtdiode ausgebildet ist, das Unterschreiten des vorbestimmten Spannungswertes signalisiert.

Der erfindungsgemäße Diagnösebaustein 1 ist dahingehend weitergebildet, dass bei einem totalen Ausfall der Busspannung ein weiterer Schaltkontakt 2 ausgelöst wird, und somit eine Störmeldung vom Schaltkontakt 2 aus abgesetzt wird.

Der Schaltkontakt 2 kann zusätzlich mit einem akustischen Signalgeber verbunden sein, um nach dem Auslösen des Schaltkontaktes 2 durch eine Störung eine akustische Meldung auszugeben.

Die Überwachung der Umgebungstemperatur, insbesondere der Temperatur der Verteilerbaugruppen während des Betriebes des Bussystems, wird in gleicher oder ähnlicher Weise wie die Überwachung der Busspannung realisiert, wobei ein vorbestimmter Temperaturbereich überwacht wird. Zur Vermeidung von Wiederholungen wird auf die vorstehende Ausführungen zur Spannungsüberwachung und -anzeige verwiesen.

Als vorteilhafte Weiterbildung des erfindungsgemäßem Diagnosebausteins 1 ist vorgesehen, dass neben der Anzeige der momentan gesendeten Bustelegramme beispielsweise mittels einer Leuchtdiode, zusätzlich oder alternativ als weitere Funktion eine Meldung übermittelt wird, wenn Telegramme mit bestimmten zu überwachenden Adressen gesendet werden. Dazu wird die Meldung an einen weiteren potentialfreien Schaltkontakt 2 des Diagnosebausteins 1 übertragen und führt zur Auslösung des Kontaktes 2.

Die zu überwachenden Adressen werden mittels der Parametrier-Software eingegeben und über den BUS in den Diagnosebaustein geladen. In gleicher Weise werden auch die Temperatur- und Spannungsschwellen parametriert.

Der erfindungsgemäße Diagnosebaustein 1 ist dahingegen weitergebildet, dass bei einem zu hohem Telegrammaufkommen, beispielsweise verursacht durch nicht ordnungsgemäß funktionierende oder falsch parametrierte Busteilnehmer eine Störmeldung über den Schaltkontakt 2 übertragen wird.

**Fig**. 2 zeigt die Funktionseinheiten des Diagnosebausteins mit den potentialfreien Kontakten 2, die mit einer Auswerteeinheit 6, deren Funktion die Auswertung beispielsweise des Spannungspegels der Busspannung oder der Bustelegramme als auch die Weiterleitung über die Funktionseinheit Pegelumsetzung 9 zum Bus 8 oder das Absetzen einer Störmeldung zu den Anzeigeeinheiten 3, 4, 5 ist.

Die Funktionseinheit Pegelumsetzung 9 weist vorzugsweise einen ASIC (Application Specific Integrated Circuit) auf, welcher die Spannungspegel der Busspannung in ein beispielsweise von einem Mikrocontroller verarbeitbares Format umwandelt.

Die Anzeige wird dabei vorzugsweise mittels lichtemittierender Dioden realisiert, welche durch ihr Aufleuchten beispielsweise das Vorhandensein der Busspannung (U= OK), eine zu niedrige Busspannung (U<U_{MIN}) oder das Telegrammaufkommen anzeigen.

### Bezugszeichenliste

- 1: Diagnosebaustein
- 2: potentialfreie Schaltkontakte
- 3: erste Anzeigeeinheit
- 4: zweite Anzeigeeinheit
- 5: dritte Anzeigeeinheit
- 6: Auswerteeinheit
- 7: Bus- Anschlussklemme
- 8: Bus
- 9: Pegelumsetzung

## Patentansprüche

1. Diagnosebaustein (1) zum Anschluß an einen Bus (8), welcher mittels einer Bus-Anschlussklemme (7) mit dem Bus (8) eines Installationsbussystems verbunden ist und wenigstens eine Anzeigeeinheit (3), (4), (5) zur Anzeige, Weiterleitung und Auswertung von Betriebszuständen und/oder Störungen von Busfunktionen aufweist, **dadurch gekennzeichnet, dass**
- die der jeweiligen zu überwachenden Busfunktion zugeordnete Anzeigeeinheit (3), (4), (5) über eine Auswerteeinheit (6) mit wenigstens einem potentialfreiem Schaltkontakt (2) verbunden ist, welcher bei einer Störung einer Busfunktion auslöst und/oder der Schaltzustand des Schaltkontaktes (2) als Störmeldung der jeweiligen Busfunktion über den Bus (8) zur weiteren Verarbeitung übertragbar ist,
- die Auswerteeinheit (6) die Betriebszustände und/oder Störungen der Busfunktionen, und/oder ein Unterund/oder Überschreiten eines vorbestimmten Bereiches einer Größe der Busfunktion erfasst, auswertet und der Anzeigeeinheit (3), (4), (5) zur Anzeige übermittelt, und/oder über die Bus- Anschlussklemme (7) auf den Bus (8) überträgt.

2. Diagnosebaustein (1) nach Anspruch 1, **dadurch gekennzeichnet, dass** die Busfunktionen die Busspannung, die Temperatur der Verteilerbaugruppen während des Betriebes des Bussystems und die über den Bus (8) gesendeten Telegramme, insbesondere Telegramme, welche mit vorbestimmten Adressen gesendet werden, umfassen.

3. Diagnosebaustein (1) nach Anspruch 1 oder 2, **dadurch gekennzeichnet, dass** Parameter, welche über den Bus (8) in den Diagnosebaustein (1) geladen werden, zum Einstellen des vorbestimmten Bereiches einer Größe einer Busfunktion durch Angabe einer oberen und/oder unteren Grenze vorgesehen sind.

4. Diagnosebaustein (1) nach einem der vorstehenden Ansprüche, **dadurch gekennzeichnet, dass** eine Parametrier -Software für die Einstellung der Parameter vorgesehen ist.

5. Diagnosebaustein (1) nach einem der vorstehenden Ansprüche, **dadurch gekennzeichnet, dass** die Parametrier -Software zur Einstellung eines vorbestimmten Temperaturbereiches und/oder zur Einstellung eines vorbestimmten Spannungsbereiches vorgesehen ist.

6. Diagnosebaustein (1) nach einem der vorstehenden Ansprüche, **dadurch gekennzeichnet, dass** wenigstens ein potentialfreier Schaltkontakt (2) für den Anschluß eines externen Signalgebers eingerichtet ist.

7. Diagnosebaustein (1) nach einem der vorstehenden Ansprüche, **dadurch gekennzeichnet, dass** das Installationsbussystem insbesondere der Europäischen Installationsbus (EIB), das Local Operating Network (LON) oder das Local Control Network (LCN) ist.

8. Diagnosebaustein (1) nach einem der vorstehenden Ansprüche, **dadurch gekennzeichnet, dass** die Anzeigeeinheit (3), (4), (5) lichtemittierende Dioden zur Anzeige der Betriebszustände und/oder Störungen der Busfunktionen aufweist.

9. Diagnosebaustein (1) nach einem der vorstehenden Ansprüche, **dadurch gekennzeichnet, dass** die Betriebszustände und Störungen der Busspannung und/oder der Umgebungstemperatur, insbesondere der Temperatur der Verteilerbaugruppen während des Betriebes des Bussystems überwacht, angezeigt, ausgewertet und auf den Bus (8) übertragen werden.

10. Verfahren zur Anzeige und Auswertung von Betriebszuständen und/oder Störungen von Busfunktionen mittels eines Diagnosebausteins (1), welcher über eine Bus-Anschlussklemme (7) mit dem Bus (8) eines Installationsbussystems verbunden wird, und wenigstens eine Anzeigeeinheit (3), (4), (5) zur Anzeige von Betriebszuständen und/oder Störungen von Busfunktionen aufweist, **dadurch gekennzeichnet, dass**
- die der jeweiligen zu überwachenden Busfunktion zugeordnete Anzeigeeinheit (3), (4), (5) über eine Auswerteeinheit (6) mit wenigstens einem potentialfreiem Schaltkontakt (2) verbunden wird, bei einer Störung einer Busfunktion der Schaltkontakt (2) auslöst wird und/oder der Schaltzustand des Schaltkontaktes (2) als Störmeldung der jeweiligen Busfunktion über den Bus (8) zur weiteren Verarbeitung übertragen wird,
- mittels der Auswerteeinheit (6) die Betriebszustände und/oder Störungen der Busfunktionen, und/oder ein Unter- und/oder Überschreiten eines vorbestimmten Bereiches einer Größe de ein Unter- und/oder Überschreiten eines vorbestimmten Bereiches einer Größe der Busfunktion erfasst und auswertet werden und der Anzeigeeinheit (3), (4), (5) zur Anzeige übermittelt werden und/oder über die Bus- Anschlussklemme (7) auf den Bus (8) übertragen werden.

11. Verfahren nach Anspruch 10, **dadurch gekennzeichnet, dass** mittels dem Diagnosebaustein (1) als Busfunktionen die Busspannung, die Temperatur der Verteilerbaugruppen während des Betriebes des Bussystems, und die über den Bus (8) gesendeten Telegramme, insbesondere Telegramme, welche mit vorbestimmten Adressen gesendet werden, überwacht und angezeigt werden.

12. Verfahren nach Anspruch 10 oder 11, **dadurch gekennzeichnet, dass** Parameter zum Einstellen des vorbestimmten Bereiches einer Größe einer Busfunktion durch Angabe einer oberen und/oder unteren Grenze über den Bus (8) in den Diagnosebaustein (1 ) geladen werden.

13. Verfahren nach Anspruch 10 bis 12, **dadurch gekennzeichnet, dass** die Parameter mittels einer Parametrier -Software eingestellt werden.

14. Verfahren nach Anspruch 13, **dadurch gekennzeichnet, dass** mittels der Parametrier - Software eine vorbestimmter Temperaturbereich oder ein vorbestimmter Spannungsbereiches eingestellt werden.

15. Verfahren nach Anspruch 10 bis 14, **dadurch gekennzeichnet, dass** die auf den Bus (8) übertragene Meldung über den Schaltzustand des Schaltkontaktes (2) zur weiteren Verarbeitung dem Bussystem zur Verfügung gestellt wird und durch weitere Busteilnehmer mittels eines Applikationsbausteines oder einer bereitgestellten Visualisierungs- Software ausgewertet und weiterverarbeitet wird.

16. Verfahren nach Anspruch 10 bis 15, **dadurch gekennzeichnet, dass** die zur Anzeigeeinheit (3), (4), (5) übermittelte Meldung über den Schaltzustand des Schaltkontaktes (2) mittels einer lichtemittierenden Diode zur Anzeige gebracht wird.

17. Verfahren nach einem der Ansprüche 10 bis 16, **dadurch gekennzeichnet, dass** über den Bus (8) gesendete Telegramme mit einer vorbestimmten Adresse überwacht, angezeigt und ausgewertet werden.

18. Verfahren nach Anspruch 17, **dadurch gekennzeichnet, dass** die zu überwachenden Adressen mittels einer Parametrier-Software eingegeben und über den Bus in den Diagnosebaustein geladen werden.

## Claims

1. A diagnostic module (1) for connection to a bus (8), which module is connected to the bus (8) of an installation bus system by means of a bus terminal (7), and at least one display unit (3), (4), (5) for displaying, routing and evaluating operating states and/or malfunctions of bus functions, **characterized in that**
- the display unit (3) associated with the respective bus function to be monitored is connected via an evaluation unit (6) with at least one voltageless switching contact (2) which trips in case of a disturbance of a bus function and/or the switching state of the switching contact (2) can be transmitted as a fault indication of the respective bus function via the bus (8) for further processing;
- the evaluation unit (6) detects and evaluates the operating states and/or disturbances of the bus functions and/or a falling below and/or exceeding of a predetermined range of a magnitude of the bus function, and transmits this to the display unit (3), (4), (5) for displaying, and/or transmits this via the bus terminal (7) to the bus (8).

2. A diagnostic module (1) according to claim 1, **characterized in that** the bus functions comprise the bus voltage, the temperature of the terminal block modules during operation of the bus system and the messages sent via the bus (8), especially messages which are sent with predetermined addresses.

3. A diagnostic module (1) according to claim 1 or 2, **characterized in that** parameters which are loaded via the bus (8) into the diagnostic module (1) are provided for setting the predetermined range of a magnitude of a bus function by stating an upper and/or lower threshold.

4. A diagnostic module (1) according to one of the preceding claims, **characterized in that** a parameterization software is provided for setting the parameters.

5. A diagnostic module (1) according to one of the preceding claims, **characterized in that** the parameterization software is provided for setting a predetermined temperature range and/or for setting a predetermined voltage range.

6. a diagnostic module (1) according to one of the preceding claims, **characterized in that** at least one voltageless switching contact (2) is set up for the connection of an external transducer.

7. A diagnostic module (1) according to one of the preceding claims, **characterized in that** the installation bus system is especially the European Installation Bus (EIB), the Local Operating Network (LON) or the Local Control Network (LCN).

8. A diagnostic module (1) according to one of the preceding claims, **characterized in that** the display unit (3), (4), (5) comprises light-emitting diodes for displaying operating states and/or disturbances of the bus functions.

9. A diagnostic module (1) according to one of the preceding claims, **characterized in that** the operating states and disturbances of the bus voltage and/or the ambient temperature, especially the temperature of the terminal block modules are monitored, displayed and evaluated during the operation of the bus system and are transmitted to the bus.

10. A method for displaying and evaluating operating states and/or disturbances of bus functions by means of a diagnostic module (1) which is connected via a bus terminal (7) with the bus of an installation bus system, and at least one display unit (3), (4), (5) for displaying, routing and evaluating operating states and/or malfunctions of bus functions, **characterized in that**
- the display unit (3) associated with the respective bus function to be monitored is connected via an evaluation unit (6) with at least one voltageless switching contact (2) which trips in case of a disturbance of a bus function and/or the switching state of the switching contact (2) can be transmitted as a fault indication of the respective bus function via the bus (8) for further processing;
- the evaluation unit (6) detects and evaluates the operating states and/or disturbances of the bus functions and/or a falling below and/or exceeding of a predetermined range of a magnitude of the bus function, and transmits this to the display unit (3), (4), (5) for displaying, and/or transmits this via the bus terminal (7) to the bus (8).

11. A method according to claim 10, **characterized in that** the diagnostic module (1) is used for monitoring and displaying as the bus functions the bus voltage, the temperature of the terminal block modules during operation of the bus system and the messages sent via the bus (8), especially messages which are sent with predetermined addresses.

12. A method according to claim 10 or 11, **characterized in that** parameters for setting the predetermined range of a magnitude of a bus function are loaded via the bus (8) into the diagnostic module (1) by stating an upper and/or lower threshold.

13. A method according to claim 10 to 12, **characterized in that** the parameters are set by means of a parameterization software.

14. A method according to claim 13, **characterized in that** a predetermined temperature range or a predetermined voltage range are set by means of the parameterization software.

15. A method according to claim 10 to 14, **characterized in that** the message on the switching state of the switching contact (2) as transmitted to the bus is made available for further processing to the bus system and is evaluated and further processed by further bus nodes by means of an application module or a provided visualization software.

16. A method according to claim 10 to 15, **characterized in that** the message transmitted to the display unit (3), (4), (5) on the switching state of the switching contact (2) is displayed by means of a light-emitting diode.

17. A method according to one of the claims 10 to 16, **characterized in that** messages with a predetermined address which are sent via the bus (8) are monitored, displayed and evaluated.

18. A method according to claim 17, **characterized in that** the addresses to be monitored are entered by means of a parameterization software and are loaded via the bus into the diagnostic module.

## Revendications

1. Module de diagnostic (1) à connecter à un bus (9), qui est relié par l'intermédiaire d'une borne de connexion de bus (7) au bus (8) d'un système de bus d'installation et présente au moins une unité d'affichage (3), (4), (5), pour l'affichage, la transmission et l'analyse d'états de fonctionnement et/ou d'anomalies de fonctions de bus, **caractérisé par le fait que**
- l'unité d'affichage (3), (4), (5) associée à la fonction de bus à surveiller est reliée par l'intermédiaire d'une unité d'analyse (6) à au moins un contact (2) sans potentiel, qui commute en présence d'une anomalie d'une fonction de bus et/ou que l'état de commutation du contact (2) peut être transmis en tant que message d'anomalie de la fonction de bus considérée via le bus (8) à des fins de traitement,
- l'unité d'analyse (6) enregistre les états de fonctionnement et/ou les anomalies des fonctions de bus et/ou un dépassement vers le bas et/ou vers le haut d'une plage prédéfinie pour une grandeur de la fonction de bus, les analyse et les transmet aux fins d'affichage à l'unité d'affichage (3), (4), (5) et/ou les transfert sur le bus (8) via la borne de connexion de bus (7).

2. Module de diagnostic (1) selon la revendication 1, **caractérisé par le fait que** les fonctions de bus comprennent la tension de bus, la température des blocs de distribution pendant le fonctionnement du système de bus et les télégrammes émis via le bus (8), plus particulièrement les télégrammes émis avec des adresses prédéfinies.

3. Module de diagnostic (1) selon la revendication 1 ou 2, **caractérisé par le fait que** des paramètres chargés via le bus (8) dans le module de diagnostic (1) sont prévus pour le réglage de la plage prédéfinie d'une grandeur d'une fonction de bus, par spécification d'une limite supérieure et/ou d'une limite inférieure.

4. Module de diagnostic (1) selon une des revendications précédentes, **caractérisé par le fait qu'**un logiciel de paramétrage est prévu pour le réglage des paramètres.

5. Module de diagnostic (1) selon une des revendications précédentes, **caractérisé par le fait que** le logiciel de paramétrage est prévu pour le réglage d'une plage de température prédéfinie et/ou le réglage d'une plage de tension prédéfinie.

6. Module de diagnostic (1) selon une des revendications précédentes, **caractérisé par le fait qu'**au moins un contact (2) sans potentiel est agencé pour la connexion d'un émetteur de signal externe.

7. Module de diagnostic (1) selon une des revendications précédentes, **caractérisé par le fait que** le système de bus d'installation est notamment le Bus d'Installation Européen (EIB), le réseau local « LON » ou le réseau local de commande « LCN ».

8. Module de diagnostic (1) selon une des revendications précédentes, **caractérisé par le fait que** l'unité d'affichage (3), (4), (5) comporte des diodes électroluminescentes pour l'affichage des états de fonctionnement et/ou des anomalies des fonctions de bus.

9. Module de diagnostic (1) selon une des revendications précédentes, **caractérisé par le fait que** les états de fonctionnement et les anomalies de la tension de bus et/ou de la température ambiante, plus particulièrement de la température des blocs de distribution pendant le fonctionnement du système de bus sont surveillés, affichés, analysés et transférés sur le bus (8).

10. Procédé d'affichage et de traitement d'états de fonctionnement et/ou d'anomalies de fonctions de bus au moyen d'un module de diagnostic (1) qui est relié au bus (8) d'un système de bus d'installation par l'intermédiaire d'une borne de connexion de bus (7) et présente au moins une unité d'affichage (3), (4), (5) pour l'affichage, la transmission et l'analyse d'états de fonctionnement et/ou d'anomalies de fonctions de bus, **caractérisé par le fait que**
- l'unité d'affichage (3), (4), (5) associée à la fonction de bus à surveiller est reliée par l'intermédiaire d'une unité d'analyse (6) à au moins un contact (2) sans potentiel, qui est commuté en présence d'une anomalie d'une fonction de bus et/ou que l'état de commutation du contact (2) peut être transmis en tant que message d'anomalie de la fonction de bus considérée via le bus (8), à des fins de traitement
- l'unité d'analyse (6) enregistre les états de fonctionnement et/ou les anomalies des fonctions de bus et/ou un dépassement vers le bas et/ou vers le haut d'une plage prédéfinie pour une grandeur de la fonction de bus, les analyse et les transmet aux fins d'affichage à l'unité d'affichage (3), (4), (5) et/ou les transfert sur le bus (8) via la borne de connexion de bus (7).

11. Procédé selon la revendication 10, **caractérisé par le fait qu'**à l'aide du module de diagnostic (1) on surveille et on affiche en tant que fonctions de bus, la tension de bus, la température des blocs de distribution pendant le fonctionnement du système de bus et les télégrammes émis via le bus (8), plus particulièrement les télégrammes émis avec des adresses prédéfinies.

12. Procédé selon la revendication 10 ou 11, **caractérisé par le fait qu'**on charge via le bus (8) dans le module de diagnostic (1), par spécification d'une limite supérieure et/ou d'une limite inférieure, des paramètres pour le réglage de la plage prédéfinie d'une grandeur d'une fonction de bus.

13. Procédé selon les revendications 10 à 12, **caractérisé par le fait qu'**on règle les paramètres à l'aide d'un logiciel de paramétrage.

14. Procédé selon la revendication 13, **caractérisé par le fait qu'**à l'aide du logiciel de paramétrage on règle une plage de température prédéfinie ou une plage de tension prédéfinie.

15. Procédé selon une des revendications 10 à 14, **caractérisé par le fait que** le message transféré sur le bus (8) concernant l'état de commutation du contact (2) est mis à disposition du système de bus pour la poursuite du traitement et est analysé et traité par d'autres participants du bus à l'aide d'un composant d'application ou d'un logiciel de visualisation mis à disposition.

16. Procédé selon une des revendications 10 à 15, **caractérisé par le fait que** le message transmis à l'unité d'affichage (3), (4), (5) concernant l'état de commutation du contact (2) est affiché au moyen d'une diode électroluminescente.

17. Procédé selon une des revendications 10 à 16, **caractérisé par le fait que** les télégrammes émis sur le bus (8) avec une adresse prédéfinie sont surveillés, affichés et analysés.

18. Procédé selon la revendication 17, **caractérisé par le fait que** les adresses à surveiller sont entrées à l'aide d'un logiciel de paramétrage et chargées dans le module de diagnostic via le bus.
